# EUROPÄISCHE PATENTANMELDUNG

(11) **EP 4 260 767 A1**
(43) Veröffentlichungstag der Anmeldung: **18.10.2023**
(21) Anmeldenummer: 23165007.8
(22) Anmeldetag: 29.03.2023
(51) Int. Cl.: A47J 27/10, A47J 43/07

(54) **KÜCHENMASCHINE UND TOPFEINSATZ ZUR VERWENDUNG IN EINER KÜCHENMASCHINE**

(30) Priorität: 30.03.2022 DE 202022101708 U
(71) Anmelder: Wundermix GmbH, 85748 Garching b. München (DE)
(72) Erfinder: KEUSGEN, Adrian, 79346 Endingen am Kaiserstuhl (DE)
(74) Vertreter: Patentanwälte Bauer Vorberg Kayser

(57) **Zusammenfassung**

Die Erfindung betrifft eine Küchenmaschine. Diese umfasst:
einen Topf (100) mit einer Topföffnung;
einen Topfdeckel (130) mit einer Befüllöffnung (131), wobei die Topföffnung mit dem Topfdeckel (130) verschließbar ist; und
einen in den Topf (100) einsetzbaren Topfeinsatz (200) mit einem Aufnahmeabschnitt (210), wobei der Aufnahmeabschnitt (210) dazu ausgebildet ist, ein Nahrungsmittelbehältnis (300) aufzunehmen,
wobei der Topfeinsatz (200) weiter eine Sicherheitsvorrichtung (230) aufweist, die derart ausgebildet und angeordnet ist, dass in einem Einsatz-Zustand des in dem Topf (100) eingesetzten Topfeinsatzes (200) und aufgenommenen Nahrungsmittelbehältnisses (300) die Befüllöffnung (131) zumindest teilweise geöffnet ist.

## Beschreibung

Die Erfindung betrifft eine Küchenmaschine und einen Topfeinsatz zur Verwendung in einer Küchenmaschine.

Gerichte und Lebensmittel können mit einer Küchenmaschine wie dem Thermomix^{®} zubereitet werden. Eine Küchenmaschine weist in der Regel einen Topf auf, der mit den entsprechenden Zutaten befüllt wird. Mittels einer Heizvorrichtung der Küchenmaschine kann dem Topf Wärme zum Kochen der Zutaten zugeführt werden. Ferner kann der Topf einen passenden Topfdeckel aufweisen, der zum Verschließen einer Topföffnung des Topfs ausgebildet ist. Dieser Topfdeckel kann eine Befüllöffnung aufweisen, welche beispielsweise mittig in dem Topfdeckel angeordnet ist und über welche der Topf beispielsweise mit Zutaten und/oder einem Nahrungsmittelbehältnis befüllt werden kann.

Verschiedene Lebensmittel können in Nahrungsmittelbehältnissen bereitgestellt, gefüllt bzw. aufbewahrt werden. Solche Nahrungsmittel- bzw. Lebensmittelbehältnisse können Dosen, Gläser, Flaschen, insbesondere Baby- bzw. Kinderflaschen sein. Um die Nahrungsmittelbehältnisse bzw. die darin enthaltene Nahrung aufzuwärmen, können diese in ein Wasserbad in dem Topf gestellt werden. Bei Erhitzung des Wasserbads überträgt sich die Wärme des Wassers auf das Nahrungsmittelbehältnis, beispielsweise durch gebildeten Dampf und/oder direkten Kontakt mit dem Wasser, und auf die Nahrung.

Wird ein Nahrungsmittelbehältnis über die Befüllöffnung in den Topf eingeführt oder zuerst das Nahrungsmittelbehältnis in den Topf eingeführt und dann der Topf mit dem Topfdeckel verschlossen, kann diese die Befüllöffnung verschließen. Beispielsweise kann ein Durchmesser des Nahrungsmittelbehältnisses einem Innendurchmesser der Befüllöffnung entsprechen. Ist die Befüllöffnung durch das Nahrungsmittbelbehältnis während des Erwärmens verschlossen und ist beispielsweise ein Wasserbad zum Erwärmen des Nahrungsmittelbehältnisses in dem Topf vorhanden, führt die Erhitzung des Wasserbads zu einem Verdampfen des Wassers und zu einem ansteigenden Druck im Topfinnenraum des Topfs. Dieser Druck kann eine kritische Grenze überschreiten und zu einer Deformation oder zu einem Explodieren und/oder Implodieren des Nahrungsmittelbehältnisses führen. Insbesondere bei der Zubereitung von Babynahrung mittels einer Babyflasche kann es vorkommen, dass die Babyflasche in den Topf eingesetzt und erwärmt wird, ohne dass auf diesen Vorgang eine erhöhte Aufmerksamkeit gerichtet wird.

Es ist daher eine Aufgabe der vorliegenden Erfindung, eine Küchenmaschine und einen Topfeinsatz für eine Küchenmaschine bereitzustellen, welche einen oder mehrere der zuvor genannten Nachteile vermindern oder beheben. Insbesondere ist es eine Aufgabe der vorliegenden Erfindung, eine Küchenmaschine und einen Topfeinsatz zum sicheren Erwärmen von Nahrungsmittelbehältnissen bereitzustellen.

Die Aufgabe wird gemäß einem ersten Aspekt durch eine Küchenmaschine gelöst, umfassend einen Topf mit einer Topföffnung und einen Topfdeckel, wobei der Topfdeckel eine Befüllöffnung aufweist. Die Topföffnung ist mit dem Topfdeckel verschließbar. Die Küchenmaschine umfasst weiter einen in den Topf einsetzbaren Topfeinsatz mit einem Aufnahmeabschnitt, wobei der Aufnahmeabschnitt dazu ausgebildet ist, ein Nahrungsmittelbehältnis aufzunehmen. Der Topfeinsatz weist weiter eine Sicherheitsvorrichtung auf, die derart ausgebildet und angeordnet ist, dass in einem Einsatz-Zustand des in dem Topf eingesetzten Topfeinsatzes und aufgenommenen Nahrungsmittelbehältnisses die Befüllöffnung zumindest teilweise geöffnet ist.

Mit der vorgeschlagenen Küchenmaschine kann ein Nahrungsmittelbehältnis wie eine Dose, ein Glas, eine Flasche, insbesondere eine Baby- bzw. Kinderflasche mittels des Aufnahmeabschnitts und über die Befüllöffnung aufgenommen werden. Mittels der Sicherheitsvorrichtung wird verhindert, dass ein vollständiges Verschließen der Befüllöffnung durch das Nahrungsmittelbehältnis erfolgt. Beispielsweise bleibt ein Spalt der Befüllöffnung offen, sodass insbesondere ein Fluidaustausch, wobei das Fluid Luft und/oder Dampf sein kann, zwischen dem Topfinnenraum und einer Topfumgebung stattfinden kann. Weiter kann überkochender Topfinhalt, wie Wasser, ebenfalls entweichen. Weiter führt der Austausch dazu, dass der Druck in dem mit dem Topfdeckel verschlossenen Topf einen kritischen Druckschwellenwert nicht erreicht und somit eine Explosionsgefahr reduziert, insbesondere verhindert wird.

Der Topf kann einen Topfinnenraum aufweisen, welcher durch eine Topfbasis, einen sich von der Topfbasis erstreckenden Topfmantel und die Topföffnung ausgebildet ist.

Die Befüllöffnung kann mittig in Bezug auf den Topfdeckel angeordnet sein. Weiter kann die Befüllöffnung eine Durchgangsöffnung sein. Die Befüllöffnung kann eine fluidische Verbindung zwischen dem Topfinnenraum und einer Topfumgebung des Topfs ausbilden. Zusätzlich oder alternativ kann die Befüllöffnung rund, insbesondere kreisförmig ausgebildet sein.

Der Topfinnenraum ist mittels des Topfdeckels verschließbar, insbesondere derart, dass ein Zugang zu dem Topfinnenraum mittels der Befüllöffnung ermöglicht, bereitgestellt und/oder ausgebildet ist.

Das insbesondere nicht von der Küchenmaschine umfasste Nahrungsmittelbehältnis kann einen runden, insbesondere einen kreisförmigen Querschnitt aufweisen. Ein Außendurchmesser des Querschnitts kann kleiner, gleich und/oder größer als ein Innendurchmesser der Befüllöffnung sein. Weiter kann das Nahrungsmittelbehältnis eine Höhe aufweisen, welche sich senkrecht zu dem kreisförmigen Querschnitt erstreckt. Die Höhe des Nahrungsmittelbehältnisses kann derart sein, dass das Nahrungsmittelbehältnis nach der Aufnahme mittels des Aufnahmeabschnitts zumindest teilweise in dem Topfinnenraum befindlich ist. Die Höhe des Nahrungsmittelbehältnisses kann derart sein, dass dieses zumindest teilweise in die Befüllöffnung hineinragt und/oder aus dem Topfdeckel herausragt.

Die Sicherheitsvorrichtung kann derart ausgebildet und angeordnet sein, dass die Sicherheitsvorrichtung zumindest teilweise in die Befüllöffnung hineinragt. Entsprechend ist die Sicherheitsvorrichtung zwischen einer Innenkontur der Befüllöffnung und dem Nahrungsmittelbehältnis angeordnet und/oder eingeklemmt.

Der Topfeinsatz kann aus einem oder mehreren Materialien gefertigt sein. Das Material oder die Materialien kann bzw. können Metall und/oder Kunststoff umfassen oder sein. Vorteilhafterweise kann der Topfeinsatz einstückig ausgebildet sein. Insbesondere kann die Sicherheitsvorrichtung Metall und/oder Kunststoff umfassen oder aus diesem bzw. diesen bestehen. Das Material, aus dem die Sicherheitsvorrichtung besteht, kann derart gewählt sein, dass es nicht oder zumindest teilweise komprimierbar und/oder elastisch ist. Insbesondere kann der Topfeinsatz aus einem Material gefertigt sein, welches hitze- und/oder kältebeständig ist.

Die Sicherheitsvorrichtung kann zumindest ein Abstandselement aufweisen, das dazu ausgebildet und angeordnet ist, zumindest einen vorbestimmten Sicherheitsabstand zwischen der Befüllöffnung und dem aufgenommenen Nahrungsmittelbehältnis einzustellen, sodass die Befüllöffnung zumindest teilweise geöffnet ist. Insbesondere kann das Abstandselement derart ausgebildet und angeordnet sein, dass der Sicherheitsabstand bei aufgenommenen Nahrungsmittelbehältnis eingehalten bleibt. Der Sicherheitsabstand kann basierend auf dem Innendurchmesser und/oder einer Höhe der Befüllöffnung, einer in den Topf eingefüllten Fluidmenge, insbesondere einer Wassermenge und/oder einer voraussichtlichen Größe, insbesondere einem Außendurchmesser und einer Höhe des Nahrungsmittelbehältnisses bestimmt sein. Insbesondere kann der Sicherheitsabstand derart bestimmt sein, dass im Einsatz-Zustand die Befüllöffnung derart geöffnet ist, dass eine Mindestmenge an Fluid, insbesondere an Gas- und/oder Luftaustausch zwischen dem Topfinnenraum und der Topfumgebung ermöglicht wird. Die Mindestmenge ist die jeweilige Menge, die bei Erhitzen des Topfinnenraums und eines Wasserbads in die Topfumgebung entweichen muss, damit der Druck innerhalb des Topfinnenraums den kritischen Druckschwellenwert nicht erreicht.

Die Sicherheitsvorrichtung kann derart ausgebildet und angeordnet sein, zumindest einen vorbestimmten Vertikalsicherheitsabstand zwischen der Befüllöffnung und dem aufgenommenen Nahrungsmittelbehältnis einzustellen, sodass die Befüllöffnung zumindest teilweise geöffnet ist, wobei sich der Vertikalsicherheitsabstand im Wesentlichen parallel zu einer Höhe des Topfs erstreckt. Der Topf kann die Topfbasis und den sich von der Topfbasis erstreckenden Topfmantel umfassen. Auf der gegenüberliegenden Seite der Topfbasis bildet der Topfmantel die Topföffnung, welche mittels des Topfdeckels verschließbar ist. Der Topf weist eine Querschnittsfläche auf, welche durch einen Innendurchmesser des Topfmantels begrenzt ist. Die Höhe des Topfs verläuft senkrecht zu der Querschnittsfläche und wird im Wesentlichen durch die Topfbasis und die Topföffnung (bzw. den Topfdeckel, wenn dieser die Topföffnung verschließt) begrenzt.

Die Sicherheitsvorrichtung kann derart ausgebildet und angeordnet sein, zumindest einen vorbestimmten Horizontalsicherheitsabstand zwischen der Befüllöffnung und dem aufgenommenen Nahrungsmittelbehältnis einzustellen, sodass die Befüllöffnung zumindest teilweise geöffnet ist, wobei sich der Horizontalsicherheitsabstand im Wesentlichen senkrecht zu der Höhe des Topfs erstreckt.

Der Vertikalsicherheitsabstand und/oder der Horizontalsicherheitsabstand können durch das Abstandselement eingestellt sein. Alternativ oder zusätzlich kann zumindest einer des Vertikalsicherheitsabstands und des Horizontalsicherheitsabstands mittels eines weiteren Abstandselements eingestellt sein.

Die Sicherheitsvorrichtung kann mäanderförmig ausgebildet sein. Alternativ oder zusätzlich kann die Sicherheitsvorrichtung aus Längsabschnitten bestehen, wobei zumindest einer der Längsabschnitte das Abstandselement ist oder umfasst. Eine erste Anzahl von Längsabschnitten kann sich entlang einer ersten Richtung erstrecken und eine zweite Anzahl von Längsabschnitten kann sich entlang einer zweiten Richtung erstrecken, wobei die erste und zweite Richtung unterschiedlich sind. Insbesondere können die erste und zweite Richtung senkrecht zueinander ausgerichtet sein. Die Längsstücke der ersten und zweiten Anzahl können alternierend angeordnet sein. Alternativ oder zusätzlich kann die Sicherheitsvorrichtung in Form eines Sicherheitsbügels ausgebildet sein. Der Sicherheitsbügel kann elastisch ausgebildet sein. Weiter kann der Sicherheitsbügel ein gekrümmtes Längsstück sein, dass sich von der Oberseite des Befestigungsabschnitts in die Befüllöffnung erstreckt.

Der Topfeinsatz kann weiter einen Befestigungsabschnitt umfassen, der derart ausgebildet ist, dass der Topfeinsatz in dem Topfinnenraum anordenbar und/oder befestigbar ist. Der Befestigungsabschnitt kann derart ausgebildet sein, dass der Topfeinsatz im Einsatz-Zustand in einer vorbestimmten Position im Topfinnenraum anordenbar und/oder befestigbar ist. Folglich kann mittels des Befestigungsabschnitts der Aufnahmeabschnitt im Topfinnenraum positioniert werden. Weiter nimmt das aufgenommene Nahrungsmittelbehältnis damit eine vorbestimmte Position ein. Weiter kann der Befestigungsabschnitt derart ausgebildet sein, dass der Aufnahmeabschnitt eine vorbestimmte Höhe zu der Topfbasis und/oder einen vorbestimmten Befüllöffnungsabstand zu der Befüllöffnung aufweist. Alternativ und/oder zusätzlich kann der Aufnahmeabschnitt auf der Topfbasis anordenbar und/oder befestigbar sein. Alternativ oder zusätzlich kann der Aufnahmeabschnitt einen Aufsatzadapter aufweisen, der dazu ausgebildet ist, auf der Topfbasis angeordenbar und/oder befestigbar zu sein. Weiter kann der Aufsatzabschnitt derart ausgebildet sein, dass dieser auf einer Schneidvorrichtung der Küchenmaschine anordenbar und/oder befestigbar ist. Die Schneidvorrichtung kann aus der Topfbasis in Richtung des Topfinnenraums ragen und dazu ausgebildet sein, Lebensmittel zu schneiden und/oder Zutaten und Fluide zu verrühren.

Die Sicherheitsvorrichtung kann auf einer Oberseite des Befestigungsabschnitts angeordnet sein, die der Topföffnung zugewandt ist.

Der Topf kann eine der Topföffnung gegenüberliegende Topfbasis und einen sich von der Topfbasis erstreckenden Topfmantel aufweisen, wobei der Topfmantel eine Topfmantelinnenseite aufweist und der Befestigungsabschnitt an der Topfmantelinnenseite anordenbar und/oder befestigbar ist.

Der Befestigungsabschnitt kann scheibenförmig ausgebildet sein und eine Lochöffnung aufweisen, ausgehend von welcher sich der Aufnahmeabschnitt in Richtung der Topfbasis erstreckt. Die Lochöffnung kann zentriert an dem scheibenförmigen Befestigungsabschnitt angeordnet sein.

Der scheibenförmige Befestigungsabschnitt kann eine durchgängige Scheibenform oder Befestigungsabschnittsstege aufweisen, die sich im Wesentlichen von dem Aufnahmeabschnitt in Richtung eines Außenumfangs des Befestigungsabschnitts erstrecken. Weiter können die Befestigungsabschnittsstege mit einer Außenkontur des Befestigungsabschnitts verbunden sein. Der Befestigungsabschnitt kann die Ober- und eine Unterseite aufweisen, wobei die Unterseite der Topfbasis und die Oberseite der Topföffnung zugewandt ist. Alternativ oder zusätzlich kann der scheibenförmige Befestigungsabschnitt Öffnungen und/oder Durchgangslöcher aufweisen, welche sich von der Ober- zu der Unterseite des Befestigungsabschnitts erstrecken. Durch die Befestigungsabschnittsstege, die Öffnungen und/oder Durchgangslöcher wird ermöglicht, dass sich aus einem Wasserbad entstehender Dampf besser im Topfinnenraum verteilen kann, da der Dampf durch die verschiedenen Öffnungen des Befestigungsabschnitts aufsteigen kann.

Der Aufnahmeabschnitt kann ein Hohlzylinder, insbesondere ein einen Hohlzylinder ausbildender Gitterkäfig sein. Entsprechend kann Material zum Ausbilden des Topfeinsatzes gespart werden. Weiter kann Wasser und/oder Dampf eines Wasserbads und/oder erwärmte Luft direkt mit dem Nahrungsmittelbehältnis an den freien Stellen des Gitters wechselwirken und Wärme übertragen.

Der Aufnahmeabschnitt kann eine Aufnahmeabschnitt-Basis aufweisen, die im Einsatz-Zustand in einem vorbestimmten Topfbasisabstand zur Topfbasis angeordnet ist, wobei sich die Aufnahmeabschnitt-Basis im Wesentlichen parallel zu der Topföffnung erstreckt und mit einem Aufnahmeabschnitt-Mantel an dem Befestigungsabschnitt angeordnet ist.

Die Aufnahmeabschnitt-Basis und/oder der Aufnahmeabschnitt-Mantel können aus einer Vielzahl von Stegen bestehen oder diese aufweisen, eine speichenförmige Struktur und/oder eine gelochte Struktur aufweisen.

Die Aufnahmeabschnitt-Basis kann eine Durchgangsöffnung aufweisen, die mittig angeordnet ist. Ein Durchmesser der Durchgangsöffnung kann derart bestimmt sein, dass ein oberes Ende der Schneidvorrichtung zumindest teilweise in die Durchgangsöffnung hineinragen kann. Weiter kann die Aufnahmeabschnitt-Basis einen Sockel aufweisen. Der Sockel kann eine Erhöhung sein, die sich von der Aufnahmeabschnitt-Basis in Richtung des Topfdeckels 130 erstreckt. Wird das Nahrungsmittelbehältnis aufgenommen, kann ein Bodenabschnitt des Nahrungsmittelbehältnisses auf dem Sockel aufliegen, sodass der Bodenabschnitt aufgrund des Sockels nur teilweise in Kontakt mit dem Topfeinsatz, insbesondere der Aufnahmeabschnitt-Basis steht. Der Sockel kann in Form einer, zwei, drei oder mehr einzelner Erhöhungen ausgebildet sein. Alternativ oder zusätzlich kann der Sockel eine durchgehende Erhöhung sein oder umfassen, insbesondere ein ringförmiger Sockel sein oder einen solchen umfassen. Der ringförmige Sockel kann einen Durchmesser aufweisen, der größer und/oder gleich der Durchgangsöffnung der Aufnahmeabschnitt-Basis ist.

Die Außenkontur des Befestigungsabschnitts kann zumindest abschnittsweise einer Innenkontur der Topfmantelinnenseite entsprechen, sodass der Befestigungsabschnitt zumindest abschnittsweise an der Innenkontur des Topfmantels anliegt und/oder befestigbar ist.

Der Topf kann zwei, drei oder mehr Topfmantelinnenseitenstege aufweisen und der Außenumfang des Befestigungsabschnitts kann Befestigungsnuten aufweisen, die dazu angeordnet und ausgebildet sind, an den Topfmantelinnenseitenstegen anzuliegen. Die Topfmantelinnenseitenstege können sich im Wesentlichen von der Topfbasis hin zu der Topföffnung erstrecken.

Eine Anzahl an Topfmantelinnenseitenstegen kann einer Anzahl an Befestigungsnuten entsprechen oder verschieden zu dieser sein. Zusätzlich oder alternativ kann die Anzahl an Befestigungsnuten und/oder der Topfmantelinnenseitenstege eins, zwei, drei oder mehr betragen.

Der Innendurchmesser des Topfmantels kann entlang einer Erstreckungsrichtung zunehmen, die von der Topfbasis in Richtung der Topföffnung ausgerichtet ist. Folglich kann der Topfbasisabstand und/oder der Befüllöffnungsabstand durch den Außendurchmesser des Befestigungsabschnitts und eine Höhe des Aufnahmeabschnitt-Mantels bestimmt werden.

Die Befüllöffnung und der Aufnahmeabschnitt, insbesondere die Aufnahmeabschnitt-Basis können sich entlang der Erstreckungsrichtung betrachtet zumindest teilweise überlagern. Ein Durchmesser des Aufnahmeabschnitts, insbesondere der Aufnahmeabschnitt-Basis kann kleiner, gleich und/oder größer als der Innendurchmesser der Befüllöffnung sein.

Der Topfeinsatz kann weiter zumindest einen Entnahmegriff zum Entnehmen des Topfeinsatzes aus dem Topf umfassen, wobei der Entnahmegriff insbesondere an der Oberseite des Befestigungsabschnitts und/oder an dem Aufnahmeabschnitt angeordnet ist. Der Entnahmegriff kann derart ausgebildet sein, dass der Topfeinsatz mittels des Entnahmegriffs in den Topf eingesetzt und/oder herausgenommen werden kann. Der Topfeinsatz kann zwei, drei oder mehr Entnahmegriffe aufweisen. Der Topfeinsatz kann einen zweiten Entnahmegriff umfassen, der derart ausgebildet ist, dass dieser die Sicherheitsvorrichtung stützt. Insbesondere kann der zweite Entnahmegriff die Sicherheitsvorrichtung gegen eine Horizontalkraft stützen, die parallel zu dem Horizontalsicherheitsabstand wirkt. Durch das Einsetzen des Nahrungsmittelbehältnisses in den Aufnahmeabschnitt kann das Nahrungsmittelbehältnis die Horizontalkraft auf die Sicherheitsvorrichtung ausüben, da die Sicherheitsvorrichtung nach außen verdrängt wird. Basierend auf den Materialeigenschaften der Sicherheitsvorrichtung kann sich diese verformen, insbesondere verbiegen oder starr bleiben. Um die Sicherheitsvorrichtung vor einem möglichen Bruch zu schützen, kann der zweite Entnahmegriff die Sicherheitsvorrichtung wie zuvor beschrieben stützen. Der zweite Entnahmegriff kann an der Sicherheitsvorrichtung angeordnet und/oder mit dieser verbunden sein. Weiter kann der Entnahmegriff einstückig mit der Sicherheitsvorrichtung ausgebildet sein. Einer oder mehrere der Entnahmegriffe können eine Fortbildung eines oder mehrerer Stege des Aufnahmeabschnitt-Mantels sein.

Die Aufgabe wird gemäß einem zweiten Aspekt durch einen Topfeinsatz zur Verwendung in einer Küchenmaschine, insbesondere gemäß dem ersten Aspekt gelöst, umfassend einen Aufnahmeabschnitt, der dazu ausgebildet ist, ein Nahrungsmittelbehältnis aufzunehmen, und eine Sicherheitsvorrichtung, die derart ausgebildet und angeordnet ist, dass in einem Einsatz-Zustand des in einem Topf der Küchenmaschine eingesetzten Topfeinsatzes und aufgenommenen Nahrungsmittelbehältnisses eine Befüllöffnung eines Topfdeckels des Topfs zumindest teilweise geöffnet ist.

Ausführungen und Merkmale, welche in Bezug auf die Küchenmaschine gemäß dem ersten Aspekt beschrieben wurden, können ebenfalls als Merkmale des Topfeinsatzes gemäß dem zweiten Aspekt ausgebildet sein.

Für weitere Vorteile, Ausführungsvarianten und Ausführungsdetails der weiteren Aspekte und ihrer möglichen Fortbildungen, wird auch auf die zuvor erfolgte Beschreibung zu den entsprechenden Merkmalen und Fortbildungen der Küchenmaschine verwiesen.

Ausführungsbeispiele werden exemplarisch anhand der beiliegenden Figuren erläutert. Es zeigen:
- Fig. 1: eine schematische Darstellung einer Küchenmaschine mit einem Topf, einem Topfeinsatz und einem Nahrungsmittelbehältnis;
- Fig. 2 bis 4: schematische Darstellungen des Topfeinsatzes aus verschiedenen Perspektiven; und
- Fig. 5: eine schematische Darstellung der Küchenmaschine mit eingesetztem Topfeinsatz und aufgenommenen Nahrungsmittelbehältnis.

In den Figuren sind gleiche oder im Wesentlichen funktionsgleiche beziehungsweise -ähnliche Elemente mit den gleichen Bezugszeichen bezeichnet.

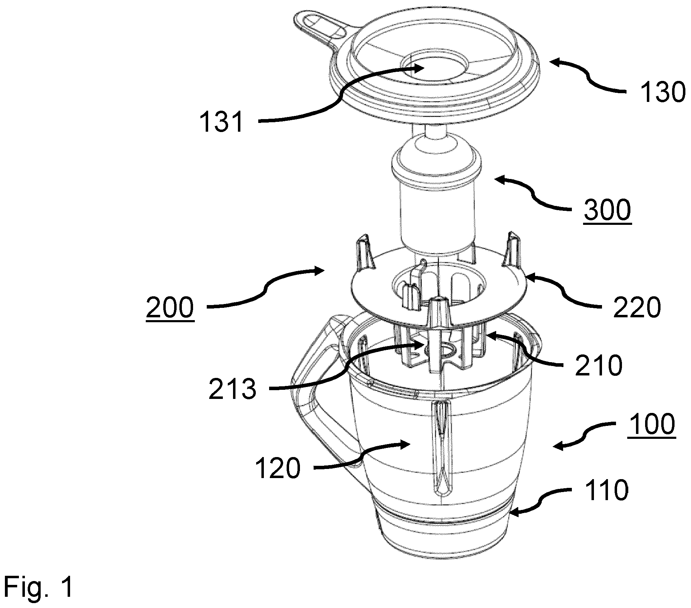

Die Fig. 1 zeigt eine Küchenmaschine mit einem Topf 100, einem Topfeinsatz 200 und einem Nahrungsmittelbehältnis 300. Der Topf 100 weist eine Topfbasis 110 und einen sich von der Topfbasis 110 erstreckenden Topfmantel 120 auf. Der Topfbasis 110 gegenüber angeordnet ist eine Topföffnung, welche mittels eines Topfdeckels 130 verschließbar ist. Der Topfdeckel 130 weist eine mittig angeordnete Befüllöffnung 131 auf, mittels der unter anderem Lebensmittel, Zutaten und auch das Nahrungsmittelbehältnis 300 einem Topfinnenraum des Topfs 100 zugeführt werden können. Bei dem Nahrungsmittelbehältnis 300 kann es sich um ein Behältnis mit oder ohne Nahrung handeln, wie einer Dose, einem Glas oder einer Flasche, insbesondere einer Babyflasche. Weiter kann es sich bei dem Nahrungsmittelbehältnis 300 um ein Behältnis handeln, das gekühlt oder aufgewärmt werden soll. Der Topfeinsatz 200 umfasst einen Aufnahmeabschnitt 210 zum Aufnehmen des Nahrungsmittelbehältnisses 300 und einen Befestigungsabschnitt 220.

Weitere Details des Topfs 100 sowie des Topfeinsatzes 200 werden in den nachfolgenden Figuren erläutert.

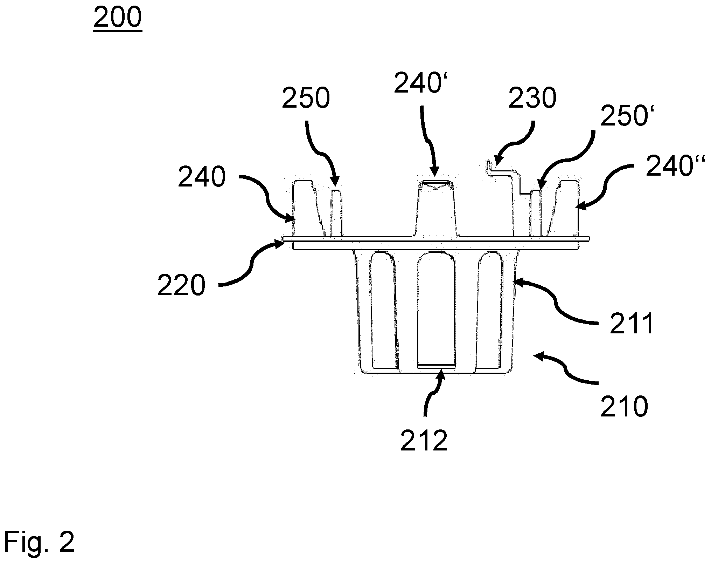

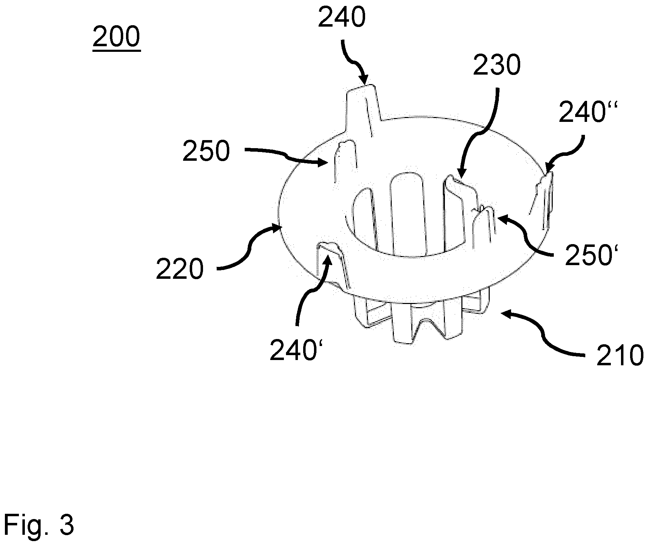

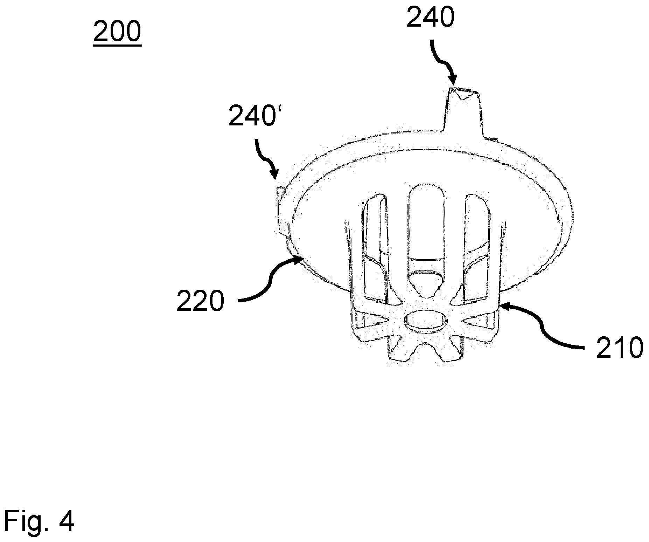

Die Fig. 2 bis 4 zeigen den Topfeinsatz 200 in einer seitlichen Ansicht als einstückiges Element. Alternativ kann der Topfeinsatz aus mehreren Einzelteilen bestehen, wobei diese zumindest teilweise miteinander verbunden sind. Der Befestigungsabschnitt 220 weist an einer der Topfbasis 110 abgewandten (bzw. einer der Topföffnung zugewandten) Oberseite mehrere Befestigungsnuten 240, 240`, 240", eine Sicherheitsvorrichtung 230 und einen ersten 250 und einen zweiten 250` Entnahmegriff auf. Die Erfindung ist nicht auf zwei Entnahmegriffe eingeschränkt und der Topfeinsatz 200 kann einen, drei, vier oder mehr Entnahmegriffe aufweisen. Weiter weist der Befestigungsabschnitt 220 mittig eine Lochöffnung auf, von welcher sich der Aufnahmeabschnitt 210 in Richtung der Topfbasis 110 erstreckt.

Wie in den Figuren gezeigt, ist der Aufnahmeabschnitt 210 als ein Gitterkäfig ausgebildet, welcher einen Hohlzylinder ausbildet. Der Aufnahmeabschnitt 210 weist einen Aufnahmeabschnitt-Mantel 211 und eine Aufnahmeabschnitt-Basis 212 auf. Ausgehend von der Lochöffnung erstreckt sich der Aufnahmeabschnitt-Mantel 211 in Richtung der Topfbasis 110 und mündet in der Aufnahmeabschnitt-Basis 212. Dabei erstreckt sich die Aufnahmeabschnitt-Basis 212 im Wesentlichen senkrecht zu dem Aufnahmeabschnitt-Mantel 211. Der Winkel zwischen der Aufnahmeabschnitt-Basis 212 und dem Aufnahmeabschnitt-Mantel 211 kann grö-ßer gleich 90 Bogengrad sein. Die Aufnahmeabschnitt-Basis 212 weist eine Durchgangsöffnung auf, die mittig angeordnet ist. Ein Durchmesser der Durchgangsöffnung kann derart bestimmt sein, dass ein oberes Ende der Schneidvorrichtung 140 zumindest teilweise in die Durchgangsöffnung hineinragt. Weiter weist die Aufnahmeabschnitt-Basis 212 einen Sockel 213 auf. Der Sockel 213 ist eine Erhöhung, die sich von der Aufnahmeabschnitt-Basis 212 in Richtung des Topfdeckels 130 erstreckt. Wird das Nahrungsmittelbehältnis 300 aufgenommen, kann ein Bodenabschnitt des Nahrungsmittelbehältnisses 300 auf dem Sockel 213 aufliegen, sodass der Bodenabschnitt nur teilweise in Kontakt mit dem Topfeinsatz 200, insbesondere der Aufnahmeabschnitt-Basis 212 steht. Der Sockel 213 kann in Form einer, zwei, drei oder mehr einzelner Erhöhungen ausgebildet sein. Alternativ oder zusätzlich kann der Sockel 213 eine durchgehende Erhöhung sein, insbesondere ein ringförmiger Sockel 213 sein, wie in Figur 1 gezeigt.

Mittels eines der ersten und zweiten Entnahmegriffe 250, 250` auf der Oberseite des Befestigungsabschnitts 220 kann der Topfeinsatz 200 einfach in den Topf 100 eingesetzt und aus diesem entnommen werden.

Die Sicherheitsvorrichtung 230 ist auf der Oberseite des Befestigungsabschnitts 220 angeordnet und weist eine mäanderförmige Struktur auf. Weiter weist die Sicherheitsvorrichtung 230 eine längliche Struktur auf, welche sich von dem Befestigungsabschnitt 220 in Richtung der Topföffnung, insbesondere in Richtung der Befüllöffnung 131 erstreckt. Der zweite Entnahmegriff 250` ist auf der Oberseite des Befestigungsabschnitts 200 ausgebildet und an der Sicherheitsvorrichtung 230 angeordnet. Der zweite Entnahmegriff 250` kann die Sicherheitsvorrichtung 230 stützen. Insbesondere bei der Aufnahme des Nahrungsmittelbehältnisses 300 kann eine Horizontalkraft auf die Sicherheitsvorrichtung 230 wirken, die sich parallel zu der Oberseite des Befestigungsabschnitts 220 erstreckt. Um einem Verbiegen, insbesondere einem Brechen der Sicherheitsvorrichtung 230 vorzubeugen, stützt der zweite Entnahmegriff 250` die Sicherheitsvorrichtung.

Wie in den Figuren dargestellt, weist die Sicherheitsvorrichtung 230 einen ersten Abschnitt auf, der an dem Befestigungsabschnitt 220 angeordnet ist und sich im Wesentlichen senkrecht zu der Oberseite des Befestigungsabschnitts 220 erstreckt. Der zweite erste und/oder der zweite Entnahmegriff 250, 250` können sich im Wesentlichen parallel zu dem ersten Abschnitt erstrecken. Anschließend folgt ein sich parallel zu der Oberseite des Befestigungsabschnitts 220 erstreckender zweiter Abschnitt der Sicherheitsvorrichtung 230, welcher in einem sich senkrecht zu der Oberseite des Befestigungsabschnitts 220 erstreckenden Abstandselement bzw. -abschnitt der Sicherheitsvorrichtung 230 endet. Durch die Maße des zweiten Abschnitts der Sicherheitsvorrichtung 230 kann insbesondere eingestellt werden, wie weit die Sicherheitsvorrichtung 230, insbesondere der zweite Abschnitt und das Abstandselement in die Lochöffnung des Befestigungsabschnitts 220 hineinragen. Weiter kann basierend auf den Dimensionen des ersten Abschnitts und des Abstandselements eine Höhe der Sicherheitsvorrichtung 230 bestimmt werden.

Die Figuren zeigen den Befestigungsabschnitt 220 als scheibenförmig mit der Lochöffnung. Alternativ kann der Befestigungsabschnitt 220 anstatt einer durchgängigen Scheibenform Befestigungsabschnittsstege aufweisen, welche von der Lochöffnung zu einem Außenumfang bzw. einer Außenkontur des Befestigungsabschnitts 220 verlaufen und mit dieser verbunden sind. Dabei können die Befestigungsabschnittsstege Fortführungen der Stege des Aufnahmeabschnitt-Mantels 211 sein. Alternativ kann der Befestigungsabschnitt 220 scheibenförmig mit einer Vielzahl von Durchgangslöchern ausgebildet sein, welche sich von der Ober- zu der Unterseite des Befestigungsabschnitts 220 erstrecken.

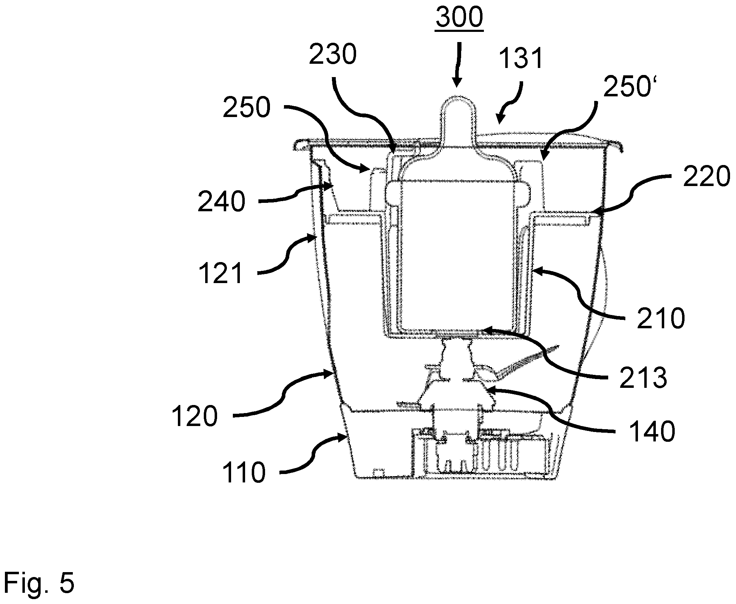

Die Fig. 5 zeigt den Topfeinsatz 200 im Einsatz-Zustand, also im in den Topf 100 eingesetzten Zustand. Weiter ist das Nahrungsmittelbehältnis 300 mittels des Aufnahmeabschnitts 210 aufgenommen und der Topf 100 mittels des Topfdeckels 130 verschlossen. Wie in der Fig. 5 weiter dargestellt, umfasst der Topf 100 eine Schneidvorrichtung 140 mit zumindest einem Schneidmesser, welche durch einen Motor in der Topfbasis 110 angetrieben werden kann. Mittels der Schneidvorrichtung 140 können Lebensmittel zerkleinert und/oder Zutaten vermischt werden. Weiter kann mittels der Rotation der Schneidvorrichtung 140 ein in den Topf 100 eingebrachtes Wasserbad gemischt werden. Der Topf 100, insbesondere die Topfbasis 110 können weiter eine Heizvorrichtung umfassen, welche dazu eingerichtet ist, Wärme auf den Topf 100 zu übertragen und/oder den Topf 100 zu kühlen.

Weiter zeigt die Fig. 5, dass ein Innendurchmesser des Topfmantels 120 von der Topfbasis 110 zu der Topföffnung zunimmt. Der Topfmantel 120 weist an seiner Topfmantelinnenseite einen, zwei oder mehrere Topfmantelinnenseitenstege 121 auf, welche sich im Wesentlichen von der Topfbasis 110 in Richtung der Topföffnung erstrecken. In dem vorliegenden Ausführungsbeispiel weist der Topfmantel 120 drei Topfmantelinnenseitenstege 121 auf. Der Topfeinsatz 200 weist an seinem Außenumfang die drei Befestigungsnuten 240, 240`, 240" auf. Die Befestigungsnuten 240, 240`, 240" sind derart ausgebildet und angeordnet, dass diese auf den Topfmantelinnenseitenstegen 121 zumindest teilweise aufliegen und/oder an den Topfmantelinnenseitenstegen 121 zumindest teilweise anliegen. Weiter ist ein Außendurchmesser des Befestigungsabschnitts 220 derart bestimmt, dass der Befestigungsabschnitt 220 nur bis zu einer vorbestimmten Höhe in den Topf 100 eingesetzt werden kann. Aufgrund des sich von der Topföffnung zu der Topfbasis 110 verringernden Innendurchmessers des Topfmantels 120 liegt der Befestigungsabschnitt 220 an der Topfmantelinnenseite bei einer vorbestimmten Höhe an, wenn der Außendurchmesser des Befestigungsabschnitts 220 dem Innendurchmesser der Topfmantelinnenseite entspricht.

Mittels der Befestigungsnuten 240, 240`, 240" und/oder des Außendurchmessers des Befestigungsabschnitts 220 ist der Befestigungsabschnitt 220 dazu ausgebildet, in dem Topfinnenraum des Topfs 100 anordenbar und/oder befestigbar zu sein. Weiter kann mittels der Befestigungsnuten 240, 240`, 240", dem Außendurchmesser des Befestigungsabschnitts 220 und/oder einer Höhe des Aufnahmeabschnitt-Mantels 211 bestimmt werden, wie tief das Nahrungsmittelbehältnis 300 in den Topf 100 eingesetzt werden kann. Weiter kann mittels der zuvor genannten Bestandteile des Topfeinsatzes 200 ein vorbestimmter Topfbasis-Abstand eingestellt sein. Der Topfbasis-Abstand kann ein Abstand zu einer Bodenfläche des Topfinnenraums sein, welcher durch eine Oberseite der Topfbasis 110 gebildet wird. Alternativ oder zusätzlich kann der Topfbasis-Abstand ein Abstand zu der Schneidvorrichtung 140 sein oder umfassen. Insbesondere kann der Topfbasis-Abstand derart bestimmt sein, dass das Nahrungsmittelbehältnis 300 maximal tief mittels des Topfeinsatzes 200 in den Topf 100 aufgenommen werden kann.

In der Fig. 5 ist der Topfeinsatz 200 derart ausgebildet, dass ein oberer Abschnitt der Schneidvorrichtung 140 zumindest teilweise in die Durchgangsöffnung der Aufnahmeabschnitt-Basis 212 hineinragt, wobei Messer der Schneidvorrichtung 140 nicht in Kontakt mit der Aufnahmeabschnitt-Basis 212 stehen bzw. bei Rotation der Schneidvorrichtung 140 kommen. Durch den Abstand der Aufnahmeabschnitt-Basis 212 zu den Messern kann bei einer Rotation dieser eine Beschädigung des Aufnahmeabschnitts 210 sowie des darin aufgenommenen Nahrungsmittelbehältnisses 300 verhindert werden. Gleichzeitig kann jedoch eine Durchmischung eines Wasserbads durch die Rotation der Messer erfolgen. Alternativ kann der Topfeinsatz 200 derart ausgebildet sein bzw. der Topfbasis-Abstand derart eingestellt sein, dass die Aufnahmeabschnitt-Basis 212 nicht in Kontakt mit der Schneidvorrichtung 140 ist und/oder der obere Abschnitt der Schneidvorrichtung nicht in die Durchgangsöffnung der Aufnahmeabschnitt-Basis 212 hineinragt.

Weiter ist in der Fig. 5 gezeigt, dass die Sicherheitsvorrichtung 230 in die Befüllöffnung 131 derart hineinragt, dass diese zwischen einer Innenkontur der Befüllöffnung 131 und dem Nahrungsmittelbehältnis 300 angeordnet ist. Entsprechend kann die Befüllöffnung 131 nicht vollständig durch das Nahrungsmittelbehältnis 300 verschlossen werden. Wird also das Wasserbad in dem Topf 100 erhitzt, um das Nahrungsmittelbehältnis 300 zu erwärmen, kann ein durch die Wärme und Wasserdampf entstehender Druck im Topfinnenraum in eine Topfumgebung des Topfs 100 aufgrund der nicht vollständig verschlossenen Befüllöffnung 131 entweichen. Die Sicherheitsvorrichtung 230 ist derart ausgebildet, dass diese bei mittels des Topfdeckels 130 verschlossenem Topf 100 in die Befüllöffnung 131 hineinragt. Folglich wird unabhängig von einer Größe des Nahrungsmittelbehältnisses 300 gewährleistet, dass der Wasserdampf aus dem Topfinnenraum entweichen kann und somit ein Druck im Topfinnenraum nicht zu groß wird, sodass eine Explosionsgefahr reduziert wird, insbesondere eine Explosion verhindert wird.

### Bezugszeichen

- 100: Topf
- 110: Topfbasis
- 120: Topfmantel
- 121: Topfmantelinnenseitensteg
- 130: Topfdeckel
- 131: Befüllöffnung
- 140: Schneidvorrichtung
- 200: Topfeinsatz
- 210: Aufnahmeabschnitt
- 211: Aufnahmeabschnitt-Mantel
- 212: Aufnahmeabschnitt-Basis
- 213: Sockel
- 220: Befestigungsabschnitt
- 230: Sicherheitsvorrichtung
- 240: Befestigungsnut
- 250, 250`: Entnahmegriff
- 300: Nahrungsmittelbehältnis

## Patentansprüche

1. Küchenmaschine, umfassend:
einen Topf (100) mit einer Topföffnung;
einen Topfdeckel (130) mit einer Befüllöffnung (131), wobei die Topföffnung mit dem Topfdeckel (130) verschließbar ist; und
einen in den Topf (100) einsetzbaren Topfeinsatz (200) mit einem Aufnahmeabschnitt (210), wobei der Aufnahmeabschnitt (210) dazu ausgebildet ist, ein Nahrungsmittelbehältnis (300) aufzunehmen,
wobei der Topfeinsatz (200) weiter eine Sicherheitsvorrichtung (230) aufweist, die derart ausgebildet und angeordnet ist, dass in einem Einsatz-Zustand des in dem Topf (100) eingesetzten Topfeinsatzes (200) und aufgenommenen Nahrungsmittelbehältnisses (300) die Befüllöffnung (131) zumindest teilweise geöffnet ist.

2. Küchenmaschine nach Anspruch 1,
wobei die Sicherheitsvorrichtung (230) derart ausgebildet und angeordnet ist, dass die Sicherheitsvorrichtung (230) zumindest teilweise in die Befüllöffnung (131) hineinragt.

3. Küchenmaschine nach Anspruch 1 oder 2,
wobei die Sicherheitsvorrichtung (230) zumindest ein Abstandselement aufweist, das dazu ausgebildet und angeordnet ist, zumindest einen vorbestimmten Sicherheitsabstand zwischen der Befüllöffnung (131) und dem aufgenommenen Nahrungsmittelbehältnis (300) einzustellen, sodass die Befüllöffnung (131) zumindest teilweise geöffnet ist.

4. Küchenmaschine nach einem der vorherigen Ansprüche,
wobei die Sicherheitsvorrichtung (230) derart ausgebildet und angeordnet ist, zumindest einen vorbestimmten Vertikalsicherheitsabstand zwischen der Befüllöffnung (131) und dem aufgenommenen Nahrungsmittelbehältnis (300) einzustellen, sodass die Befüllöffnung (131) zumindest teilweise geöffnet ist,
wobei sich der Vertikalsicherheitsabstand im Wesentlichen parallel zu einer Höhe des Topfs (100) erstreckt.

5. Küchenmaschine nach einem der vorherigen Ansprüche,
wobei die Sicherheitsvorrichtung (230) derart ausgebildet und angeordnet ist, zumindest einen vorbestimmten Horizontalsicherheitsabstand zwischen der Befüllöffnung (131) und dem aufgenommenen Nahrungsmittelbehältnis (300) einzustellen, sodass die Befüllöffnung (131) zumindest teilweise geöffnet ist, wobei sich der Horizontalsicherheitsabstand im Wesentlichen senkrecht zu der Höhe des Topfs (100) erstreckt.

6. Küchenmaschine nach einem der vorherigen Ansprüche,
wobei die Sicherheitsvorrichtung (230) mäanderförmig ausgebildet ist.

7. Küchenmaschine nach einem der vorherigen Ansprüche,
wobei der Topfeinsatz (200) weiter einen Befestigungsabschnitt (220) umfasst, der derart ausgebildet ist, dass der Topfeinsatz (200) in einem Topfinnenraum des Topfs (100) anordenbar und/oder befestigbar ist.

8. Küchenmaschine nach einem der vorherigen Ansprüche,
wobei die Sicherheitsvorrichtung (230) auf einer Oberseite des Befestigungsabschnitt (220) angeordnet ist, die der Topföffnung zugewandt ist.

9. Küchenmaschine nach einem der vorherigen Ansprüche,
wobei der Topf (100) eine der Topföffnung gegenüberliegende Topfbasis (110) und einen sich von der Topfbasis (110) erstreckenden Topfmantel (120) aufweist,
wobei der Topfmantel (120) eine Topfmantelinnenseite aufweist und der Befestigungsabschnitt (220) an der Topfmantelinnenseite anordenbar und/oder befestigbar ist.

10. Küchenmaschine nach einem der vorherigen Ansprüche,
wobei der Befestigungsabschnitt (220) scheibenförmig ausgebildet ist und eine Lochöffnung aufweist, ausgehend von welcher sich der Aufnahmeabschnitt (210) in Richtung der Topfbasis erstreckt.

11. Küchenmaschine nach einem der vorherigen Ansprüche,
wobei der scheibenförmige Befestigungsabschnitt (220) Befestigungsabschnittsstege aufweist, die sich im Wesentlichen von dem Aufnahmeabschnitt (210) in Richtung eines Außenumfangs des Befestigungsabschnitts (220) erstrecken.

12. Küchenmaschine nach einem der vorherigen Ansprüche,
wobei der Aufnahmeabschnitt (220) im Einsatz-Zustand des Topfeinsatzes (200) einen vorbestimmten Topfbasisabstand zu der Topfbasis (110) aufweist.

13. Küchenmaschine nach einem der vorherigen Ansprüche,
wobei der Aufnahmeabschnitt (210) ein Hohlzylinder, insbesondere ein einen Hohlzylinder ausbildender Gitterkäfig ist.

14. Küchenmaschine nach einem der vorherigen Ansprüche,
wobei der Aufnahmeabschnitt (210) eine Aufnahmeabschnitt-Basis (212) aufweist, die im Einsatz-Zustand in dem vorbestimmten Abstand zur Topfbasis (110) angeordnet ist, wobei sich die Aufnahmeabschnitt-Basis (212) im Wesentlichen parallel zu der Topföffnung erstreckt und mit einem Aufnahmeabschnitt-Mantel (211) an dem Befestigungsabschnitt (220) angeordnet ist.

15. Küchenmaschine nach einem der vorherigen Ansprüche,
wobei die Aufnahmeabschnitt-Basis (212) und/oder der Aufnahmeabschnitt-Mantel (211) aus einer Vielzahl von Stegen bestehen, eine speichenförmige Struktur und/oder eine gelochte Struktur aufweisen.

16. Küchenmaschine nach einem der vorherigen Ansprüche,
wobei der scheibenförmige Befestigungsabschnitt (220) den Außenumfang mit einer Außenkontur aufweist, die zumindest abschnittsweise einer Innenkontur der Topfmantelinnenseite entspricht, sodass der Befestigungsabschnitt (220) zumindest abschnittsweise an der Innenkontur des Topfmantels (120) anliegt.

17. Küchenmaschine nach einem der vorherigen Ansprüche,
wobei der Topf (100) zwei, drei oder mehr Topfmantelinnenseitenstege (121) aufweist, und der Außenumfang des Befestigungsabschnitts (220) Befestigungsnuten (240, 240`, 240") aufweist, die dazu angeordnet und ausgebildet sind, an den Topfmantelinnenstegen (121) anzuliegen.

18. Küchenmaschine nach einem der vorherigen Ansprüche,
wobei eine Anzahl an Topfmantelinnenseitenstegen (121) einer Anzahl an Befestigungsnuten (240, 240`, 240") entspricht oder verschieden zu dieser ist, und/oder
wobei die Anzahl an Befestigungsnuten (240, 240`, 240") eins, zwei, drei oder mehr beträgt.

19. Küchenmaschine nach einem der vorherigen Ansprüche,
wobei ein Innendurchmesser des Topfmantels (120) entlang einer Erstreckungsrichtung zunimmt, die sich von der Topfbasis (110) in Richtung der Topföffnung erstreckt.

20. Küchenmaschine nach einem der vorherigen Ansprüche,
wobei sich die Befüllöffnung (131) und der Aufnahmeabschnitt (210) entlang der Erstreckungsrichtung betrachtet zumindest teilweise überlagern.

21. Küchenmaschine nach einem der vorherigen Ansprüche,
wobei der Topfeinsatz (200) weiter zumindest einen Entnahmegriff (250) zum Entnehmen des Topfeinsatzes (200) aus dem Topf (100) umfasst,
wobei der Entnahmegriff (250) insbesondere an der Oberseite des Befestigungsabschnitts (220) und/oder an dem Aufnahmeabschnitt (210) angeordnet ist.

22. Topfeinsatz (200) zur Verwendung in einer Küchenmaschine nach einem der Ansprüche 1 bis 21, umfassend:
einen Aufnahmeabschnitt (210), der dazu ausgebildet ist, ein Nahrungsmittelbehältnis (300) aufzunehmen,
eine Sicherheitsvorrichtung (230), die derart ausgebildet und angeordnet ist, dass in einem Einsatz-Zustand des in einen Topf (100) der Küchenmaschine eingesetzten Topfeinsatzes (200) und aufgenommenen Nahrungsmittelbehältnisses (300) eine Befüllöffnung (131) eines Topfdeckels (130) des Topfs (100) zumindest teilweise geöffnet ist.
